# EUROPÄISCHE PATENTSCHRIFT

(11) **EP 0 988 427 B1**
(45) Veröffentlichungstag und Bekanntmachung des Hinweises auf die Patenterteilung: **04.08.2004**
(21) Anmeldenummer: 98930777.2
(22) Anmeldetag: 02.06.1998
(51) Int. Cl.: E04B 1/26, F16B 25/10

(54) **VERBINDUNGSELEMENT ZUM VERBINDEN VON WENIGSTENS ZWEI HOLZBAUTEILEN UND EINER KNOTENPLATTE**
CONNECTING ELEMENT FOR CONNECTING AT LEAST TWO WOODEN CONSTRUCTION PARTS AND A JOINT PLATE
ELEMENT D'ASSEMBLAGE POUR RELIER AU MOINS DEUX ELEMENTS EN BOIS ET UNE PLAQUE D'ENCOIGNURE

(30) Priorität: 09.06.1997 DE 19724285
(43) Veröffentlichungstag der Anmeldung: 29.03.2000
(73) Patentinhaber: SFS intec Holding AG, 9435 Heerbrugg (CH)
(72) Erfinder: MATTLE, Paul, CH-9443 Widnau (CH)
(74) Vertreter: Ludescher, Hans
(86) Internationale Anmeldenummer: PCT/EP1998/003266
(87) Internationale Veröffentlichungsnummer: WO 1998/056998

(56) Entgegenhaltungen:
- WO-A-91/11632
- DE-A- 2 555 647
- DE-A- 3 828 446
- DE-C- 4 112 591
- DE-C- 4 440 437
- US-A- 4 034 641

## Beschreibung

Die Erfindung betrifft ein Verbindungselement mit einem im wesentlichen stabförmigen Schaft zum Einsatz bei Verbindungen von wenigstens zwei Holzbauteilen und mindestens einer in einen oder mehrere Schlitz(e) der Holzbauteile einsetzbaren, aus Metall bestehenden Knotenplatte.

Bei Fachwerk- oder Rahmenkonstruktionen werden die eingesetzten Holzbauteile in der Regel durch Knotenplatten verbunden, welche aus Metall gefertigt sind. Die Knotenplatten werden in mittige Schlitze an den Enden der Holzbauteile eingesetzt. In den Holzbauteilen und den Knotenplatten sind in übereinstimmender Anordnung Bohrungen vorgesehen, in welche in der Regel Stabdübel eingesetzt werden. Diese Stabdübel aus Metall fixieren die Knotenplatte in dem betreffenden Holzbauteil. Damit sichergestellt ist, daß die Stabdübel die normenmäßig vorgeschriebenen Kräfte zwischen den Holzbauteilen und der Knotenplatte übertragen können, und daß eine möglichst steife und eine gegenseitige Verschiebung verhindernde Verbindung geschaffen werden kann, müssen die Bohrungen sowohl in den Holzbauteilen als auch in der Knotenplatte relativ eng aufeinander abgestimmt und passend ausgeführt sein.

Da hier zwei verschiedene Materialien verwendet werden, nämlich einerseits Holz und andererseits die metallene Knotenplatte, ergeben sich bei der Herstellung der Bohrungen besondere Probleme. In der Regel werden bisher - um Bohrtoleranzen einhalten zu können - vorerst die Löcher in den Holzbauteilen gebohrt. Anschließend wird die Knotenplatte in die Schlitze der Holzbauteile eingesetzt, worauf die Bohrungen in der Knotenplatte hergestellt werden, so daß die bereits hergestellten Bohrungen in den Holzbauteilen sozusagen eine Art Bohrlehre bilden. Jetzt werden mit einem entsprechenden Bohrer die Bohrungen in der Knotenplatte hergestellt und der Stabdübel zur gegenseitigen Verbindung von Holzbauteilen und Knotenplatte eingeschlagen. Diese Arbeitsweise ist einerseits sehr aufwendig, andererseits kann damit keine steife und tragfähige Verbindung erreicht werden, da die Paßgenauigkeit nicht optimal ist.

Es ist auch eine Arbeitsweise bekannt geworden, bei der zuerst die Bohrungen in der Knotenplatte hergestellt werden. Diese Knotenplatte wird dann als Schablone zum Bohren der Löcher in den Holzbauteilen verwendet. Da in einem solchen Falle die schlußendliche Lage der Knotenplatte gegenüber dem Bohrvorgang axial versetzt ist, kann es hier ebenfalls zu entsprechenden Ungenauigkeiten kommen, so daß Maßtoleranzen nicht unbedingt eingehalten werden können. Zudem ist auch diese Arbeitsweise sehr umständlich und zeitaufwendig.

Nach einem weiteren bekannten Verfahren (DE-C-43 15 101) wird vorerst die Knotenplatte in den entsprechenden Schlitz in dem Holzbauteil eingesetzt. In diesem in der richtigen Stellung eingesetzten Zustand werden mittels einer Bohrvorrichtung die Bohrungen durch die Holzbauteile und die Knotenplatte hindurch hergestellt. Dabei wird eine Art Stufenbohrer eingesetzt, um die unterschiedlichen Verhältnisse beim Bohren in Holz und in Metall berücksichtigen zu können. Nach der Herstellung der Bohrung können die Stabdübel entsprechend eingeschlagen werden.

Auch bei einer solchen bekannten Ausgestaltung ist eine besondere Halterung der Bohrvorrichtung erforderlich, da ebenfalls darauf zu achten ist, daß sich die in einen entsprechenden Schlitz in dem Holzbauteil eingeführte Knotenplatte nicht verschieben kann.

Gerade bei einem Arbeiten auf der Baustelle selbst ergeben sich bei einer solchen Anordnung Probleme, weil der Einsatz besonders großer und sperriger Vorrichtungen auf dem Bau mit einer umständlichen Handhabung verbunden ist. Dazu kommt, daß eine Zugänglichkeit für eine solche Bohrvorrichtung nicht überall vorhanden ist.

Weiter ist ein Verbinder für gedeckte Balkenanschlüsse bekannt geworden (DE-A-41 24 553), mit welchem exakte Meß- und Bohrarbeiten vermieden werden sollen. Zur Verbindung zwischen dem Holzbauteil und der Knotenplatte werden Nägel eingeschlagen, ohne vorher Bohrungen herzustellen. Dazu bedarf es aber einer ganz besonderen Konstruktion der Knotenplatte, um das Durchdringen derselben durch Nägel überhaupt zu ermöglichen. Es muß also dafür gesorgt sein, daß der Bereich der Knotenplatte, wo Nägel durchgetrieben werden sollen, aus dünnwandigem Blech besteht. Zur Berücksichtigung dieses speziellen Bereiches kommt noch die Gefahr dazu, daß sich die Nägel verbiegen, oder daß es zu einer Spaltbildung kommt, zumal solche Knotenplatten in der Regel an den Stirnseiten von Holzbauteilen eingesetzt werden.

Es sind eine Reihe von Bohrschrauben bekannt (u.a. durch die DE-A-38 28 446 oder die DE-C-41 12 591), welche eine Bohrspitze und einen Schaft mit einem Gewinde aufweisen. Bei derartigen Bohrschrauben ist immer ein entsprechend langes Gewinde vorhanden und stets vorgesehen, daß der Bohrdurchmesser größer ist als der Kerndurchmesser des Schaftes im Gewindebereich. Bohrschrauben sind jedoch für den hier vorgesehenen Zweck ganz allgemein ungeeignet, da bereits beim Bohrvorgang ein Vorschub entsprechend der Gewindesteigung vorhanden wäre. Gerade dies ist aber beim Durchbohren relativ dicker Knotenplatten nicht denkbar.

Die vorliegende Erfindung hat sich daher zur Aufgabe gestellt, ein Verbindungselement der eingangs genannten Art zu schaffen, mit welchem eine paßgenaue Verbindung zwischen

Holzbauteilen und Knotenplatten möglich ist, und zwar mit einer einfachen Handhabung bei jeder Art von Holzbauteilen und Knotenplatten.

Erfindungsgemäß gelingt dies dadurch, daß der stabförmige Schaft zumindest an seinem einen Ende einen eine Bohrung in der Knotenplatte und in den Holzbautellen herstellenden Bohrteil und an seinem anderen Ende einen Werkzeugangriff für einen Drehantrieb aufweist, wobei der Durchmesser des Schaftes wenigstens über einen oder mehrere Teilbereiche seiner Länge zumindest annähernd dem Bohrdurchmesser des Bohrteiles entspricht, und daß an dem dem Bohrteil gegenüberliegenden Ende des Schaftes Mittel zur axialen Verschiebesicherung in eingesetztem Zustand ausgebildet sind.

Durch die Erfindung kann in einem Arbeitsschritt die Bohrung zumindest in der Knotenplatte oder gegebenenfalls sowohl in der Knotenplatte als auch im Holzbauteil hergestellt werden, und zwar durch das stabförmige Verbindungselement, welches schlußendlich in dieser Bohrung die gegenseitige Verbindung von Knotenplatte und Holzbauteil bewirkt. Da das Verbindungselement somit in einem Arbeitsgang die Bohrung in der Knotenplatte herstellt und gleichzeitig die Verbindung zwischen diesen beiden Teilen bildet, ist stets eine paßgenaue Übereinstimmung zwischen den Bohrungen in der Knotenplatte und im Holzbauteil gegeben. Dadurch ergibt sich eine exakte und verschiebungsfreie Verbindung zwischen der Knotenplatte und dem Holzbauteil. Dabei ist es an sich gleichgültig, ob bei Anordnung von mehreren parallel zueinander einsetzbaren Verbindungselementen diese nun exakt parallel zueinander ausgerichtet sind oder einen spitzen Winkel miteinander einschließen. Jedes Verbindungselement für sich bildet in exakter Passung und Anordnung eine optimale Befestigung zwischen den Holzbauteilen und der Knotenplatte.

Das Verbindungselement wird in der Bohrung der Knotenplatte und/oder im Holzbauteil formund/oder kraftschlüssig gegen axiale Verschiebung gesichert gehalten. Gerade durch die beim Bohrvorgang anfallenden Späne wird eine zusätzliche innige Verbindung zwischen dem Verbindungselement und der Knotenplatte bzw. dem Holzbauteil geschaffen, so daß allein durch das Eindrehen des Verbindungselementes eine form- und/oder kraftschlüssige Sicherung gegen ein axiales Verschieben desselben geschaffen werden kann. Zur Bewirkung einer form- und/oder kraftschlüssigen und unverlierbaren Halterung sind aber durchaus auch andere zusätzliche Mittel einsetzbar.

Durch den Einsatz des erfindungsgemäßen Verbindungselementes ist es auch möglich, ein Holzbauteil mit vorbereiteten Bohrungen und eine Knotenplatte ineinander zu schieben bzw. aneinander anzusetzen, wobei dann ein Verbindungselement in die vorbereitete Bohrung im Holzbauteil eingeführt wird und sich anschließend die Bohrung in der Knotenplatte selbst herstellt. Auf diese Weise ist es möglich, bereits im Werk vorbereitete Bohrungen als eine Art Lehre zum nachträglichen Durchbohren der Knotenplatte zu verwenden. Auch bei einem solchen Verfahrensablauf wird die Bohrung in der Knotenplatte selbst vom Verbindungselement, welches zugleich die gegenseitige Verbindung zwischen dem Holzbauteil und der Knotenplatte bewirkt, hergestellt. Ebenso ist diesfalls eine exakte Passung zwischen den Bohrungen im Holzbauteil und in der Knotenplatte gegeben, so daß das Verbindungselement den Holzbauteil und die Knotenplatte in einem Festsitz miteinander verbindet.

Das Verbindungselement muß den Holzbauteil auch nicht zur Gänze durchdringen. Der Setzvorgang für das Verbindungselement kann also beendet werden, bevor eine durchgehende Bohrung hergestellt ist. Dadurch wird auf der einen Seite eines Holzbauteiles die Art der gegenseitigen Verbindung gar nicht sichtbar. Damit kann die Verbindung aus ästhetischen Gründen auf einer Seite des Holzbauteiles verdeckt bzw. unsichtbar gehalten werden. Aus Festigkeitsgründen ist eine durchgehende Bohrung für die Verbindung nicht notwendig, da es ausreichen würde, wenn das Verbindungselement beidseitig von einer Knotenplatten ausgehend zumindest einen gewissen Bereich in den Holzbauteil hineinragt.

Durch diese erfindungsgemäßen Maßnahmen wird ein Verbindungselement geschaffen, welches in besonderer Weise für diesen ganz speziellen Einsatzzweck geeignet ist. Zur Befestigung von Verbindungsblechen oder dergleichen, welche an der Oberfläche von Holzbauteilen angeordnet sind, werden bisher schon Schrauben eingesetzt. Im Holzbau an sich und insbesondere bei der gegenseitigen Befestigung von Holzbauteilen und Knotenplatten erfolgte bis jetzt kein Einsatz von selbstbohrenden Verbindungselementen. Gerade bei der hier konkret anstehenden Lösung bedeutet aber die Ausbildung eines Verbindungselementes nach Art eines stabförmigen Schaftes mit einem entsprechenden Bohrteil einen wesentlichen Fortschritt. Mit einem solchen Verbindungselement kann die erforderliche Bohrung in einem Arbeitsgang hergestellt werden. Zudem steht dann auch gleich das Verbindungselement zur Verfügung, welches in dieser Bohrung zur Verbindung zwischen der Knotenplatte und dem Holzbauteil dient. Außerdem wird mit einem solchen Verbindungselement eine exakte und querverschiebungsfreie gegenseitige Fixierung ermöglicht. Mit einem entsprechend gestalteten Bohrteil kann in optimaler Weise sowohl in dem Holzbauteil als auch in der metallenen Knotenplatte eine ordnungsgemäße Bohrung hergestellt werden.

Weiter wird vorgeschlagen, daß am Bohrteil und gegebenenfalls an einem an den Bohrteil anschließenden Abschnitt des stabförmigen Schaftes eine oder mehrere Spannut(en) ausgebildet ist bzw. sind. Durch solche Spannuten wird die Möglichkeit geschaffen, das beim Bohrvorgang entstehende, abgearbeitete Material entsprechend transportieren und aufnehmen zu können. Dabei ist keine Notwendigkeit gegeben, daß die Späne ins Freie befördert werden, sondern es reicht aus, wenn die hergestellten Späne in den Spannuten in verdichteter Form aufgenommen werden. Gleichgültig ist dabei auch, wenn sich der eine oder andere Metallspan in die Bohrungswandung im Holzbauteil eingräbt, da dies für die schlußendliche Passung keinerlei Beeinträchtigung bedeutet. Das die Bohrung selbst herstellende Verbindungselement verbleibt ja schlußendlich in dieser hergestellten Bohrung.

Bei einer Ausführungsvariante wird vorgeschlagen, daß unmittelbar an den Bohrteil anschließend ein Abschnitt mit gegenüber dem Bohrteil verringertem Durchmesser anschließt. Dadurch wird im unmittelbar an den Bohrteil anschließenden Bereich eine vergrößerte Aufnahmemöglichkeit für die Bohrspäne geschaffen.

Bei einer besonderen Ausführungsform der Erfindung wird vorgesehen, daß am stabförmigen Schaft mit axialem Abstand versetzt zum Bohrteil ein weiterer Bohrabschnitt mit gegenüber dem ersten Bohrteil vergrößertem Bohrdurchmesser ausgebildet ist. Damit kann die Herstellung der Bohrung und die Menge der anfallenden Späne auf zwei im gleichen Arbeitsgang aufeinander folgende Bohrverfahren aufgeteilt werden. Gerade bei entsprechend dickeren Verbindungselementen ist dies von Vorteil.

Zur Schaffung einer besonders großen Aufnahmekapazität für die anfallenden Bohrspäne wird vorgeschlagen, daß eine oder mehrere Spannut(en) über einen Großteil der Länge oder über die ganze Länge des stabförmigen Schaftes geführt ist bzw. sind.

Eine weitere Ausführungsvariante sieht vor, daß zumindest auf einem Teilbereich der Länge des stabförmigen Schaftes ein Gewinde oder eine gewindeähnliche Ausbildung vorgesehen ist. Erreicht wird dadurch eine zusätzliche besondere Sicherung gegen ein axiales Verschieben des Verbindungselementes, so daß das Verbindungselement nach dem endgültigen Setzen auch bei einem eventuellen Schwinden im Bereich des Holzbauteiles nicht gelockert werden kann.

Bei anderen möglichen Ausführungsformen in diesem Zusammenhang wird vorgeschlagen, daß zumindest auf einem Teilbereich der Länge des stabförmigen Schaftes eine aufgerauhte Oberfläche, eine Rändelung oder dergleichen vorgesehen ist oder Erhebungen bzw. Vertiefungen ausgebildet sind. Auch auf diese Art und Weise kann eine zusätzliche Verdrehund Verschiebesicherung für das Verbindungselement geschaffen werden, welche ein Heraustreten des Verbindungselementes aus der hergestellten Bohrung nach dem endgültigen Setzen verhindert.

Für ein optimales Verschließen des Beginns der Bohrung und eine entsprechende Verdichtung des Holzes in diesem Bereich wird vorgeschlagen, daß das dem Bohrteil abgewandte Ende des stabförmigen Schaftes kegelstumpfförmig erweitert ausgeführt ist. Eine solche kegelstumpfförmige Erweiterung kann natürlich auch dazu verwendet werden, um das Drehmoment entsprechend zu erhöhen. Es könnte auf diese Weise eine drehmomentabhängige Abschaltung des weiteren Eindrehvorganges erfolgen.

Eine bevorzugte Ausführungsform sieht vor, daß an dem auf den Abschnitt verringerten Durchmessers folgenden, zumindest annähernd dem Bohrdurchmesser angepaßten Abschnitt des stabförmigen Schaftes eine oder mehrere Spannut(en) ausgebildet ist bzw. sind. Somit ist nicht nur unmittelbar auf den Bohrteil folgend ein vergrößerter Ringraum zur Aufnahme von Spänen geschaffen worden, sondern es sind auch daran anschließend noch Spannuten vorhanden, die Bohrmaterial aufnehmen können, ohne daß die Spannuten bereits unmittelbar vom Bohrteil selbst ausgehen. Dadurch ist ebenfalls in besonderer Weise die Gewähr gegeben, daß nicht durch einen entsprechend großen Anfall von Bohrspänen das Drehmoment auf das einzudrehende Verbindungselement übermäßig stark erhöht wird.

Bei der besonderen Anwendungsart des erfindungsgemäßen Verbindungselementes ist es von besonderem Vorteil, wenn der Werkzeugangriff als Innenangriff ausgebildet ist. Als eine Art Innenangriff kann dabei nicht nur ein speziell ausgebildeter Innenangriff angesehen werden, sondern auch eine Art Schraubenschlitz. Es ist dadurch in einfacher Weise möglich, auch das antriebsseitige Ende des Verbindungselementes bis unterhalb der Oberfläche des Holzbauteiles eindrehen zu können.

Im Rahmen der Erfindung ist es aber auch möglich, daß der Werkzeugangriff als Außenangriff ausgebildet ist, wobei in einem solchen Falle beispielsweise ein Außensechskant vorgesehen werden könnte. Da dieser Außenangriff insbesondere bei einem Versenken des Verbindungselementes im Querschnitt entsprechend klein gestaltet werden muß, hängt die Möglichkeit des Einsatzes von Außenangriffen von dem zu übertragenden Drehmoment ab.

Bei einer besonderen Ausführungsform des Verbindungselementes, und zwar insbesondere dann, wenn ein entsprechend größerer Durchmesser des Verbindungselementes erforderlich ist, wird vorgeschlagen, daß auf den weiteren Bohrabschnitt mit gegenüber dem ersten Bohrteil vergrößertem Bohrdurchmesser am stabförmigen Schaft ein im wesentlichen zylindrischer Abschnitt mit gegenüber dem weiteren Bohrabschnitt geringfügig kleinerem Durchmesser folgt. Obwohl dieser weitere Bohrabschnitt eine geringfügig größere Bohrung herstellt, ist der darauf folgende stabförmige Schaft sowohl in der Knotenplatte als auch im Holzbauteil in einer ausgezeichneten Passung fixiert gehalten. Trotzdem ist aber die Gewähr gegeben, daß das Drehmoment bei einem eventuellen Null-Spiel zu stark erhöht wird. Somit ist ein entsprechender Ausgleich zwischen dem erforderlichen Drehmoment zur Durchführung des Bohrens und zum Vorschub des Verbindungselementes und der notwendigen Passung zwischen den Bohrungen gewährleistet.

Bei einer Ausführungsform des Verbindungselementes ist vorgesehen, daß eine oder mehrere Spannut(en) schraubenlinienförmig verlaufend angeordnet ist bzw. sind. Diesfalls werden die entstehenden Bohrspäne praktisch ähnlich wie bei einem Spiralbohrer in den schraubenlinienförmig verlaufenden Spannuten in Richtung zum Antriebsende des Verbindungselementes hin gefördert. Dadurch ist gewährleistet, daß die Spannuten bis zum endgültigen Setzen des Verbindungselementes praktisch vollständig mit Bohrspänen gefüllt sind, so daß ein im Wesentlichen durchgehend zylindrisches Verbindungselement mit gänzlicher Oberflächenanlage zur Wandung des Bohrloches hin geschaffen wird.

Im Rahmen der Erfindung ist es aber auch denkbar, daß eine oder mehrere Spannut(en) achsparallel verlaufend angeordnet ist bzw. sind. Die Förderwirkung der Späne in solchen Spannuten ist trotz des Drehvorganges des Verbindungselementes praktisch nicht mehr gegeben, so daß Spannuten bei einer solchen Anordnung allein durch die in axialer Richtung nachpressenden Bohrspäne in axialer Richtung gefüllt werden.

Weitere erfindungsgemäße Merkmale und besondere Vorteile werden in der nachstehenden Beschreibung anhand der Zeichnungen noch näher erläutert. Es zeigen:
- Fig. 1: eine auseinander gezogene Darstellung einer Verbindung zwischen zwei Holzbauteilen über eine Knotenplatte, wobei auch die einzusetzenden Verbindungselemente dargestellt sind;
- Fig. 2: eine Ausführungsform einer Verbindung zwischen Holzbauteilen mit einer speziellen Art von Knotenplatte;
- Fig. 3: eine Ansicht eines speziellen Verbindungselementes gemäß der Darstellung in Fig. 1;
- Fig. 4: bis Fig. 9 verschiedene Ausführungsvarianten von Verbindungen zwischen Holzbauteilen und einer Knotenplatte, wobei teilweise auch verschiedene Konstruktionen von Verbindungselementen eingesetzt sind;
- Fig. 10 und Fig. 11: zwei Ausführungsformen zur Verbindung von zwei stirnseitig aneinander anschließenden Holzbauteilen mit entsprechend gestalteten Knotenplatten.

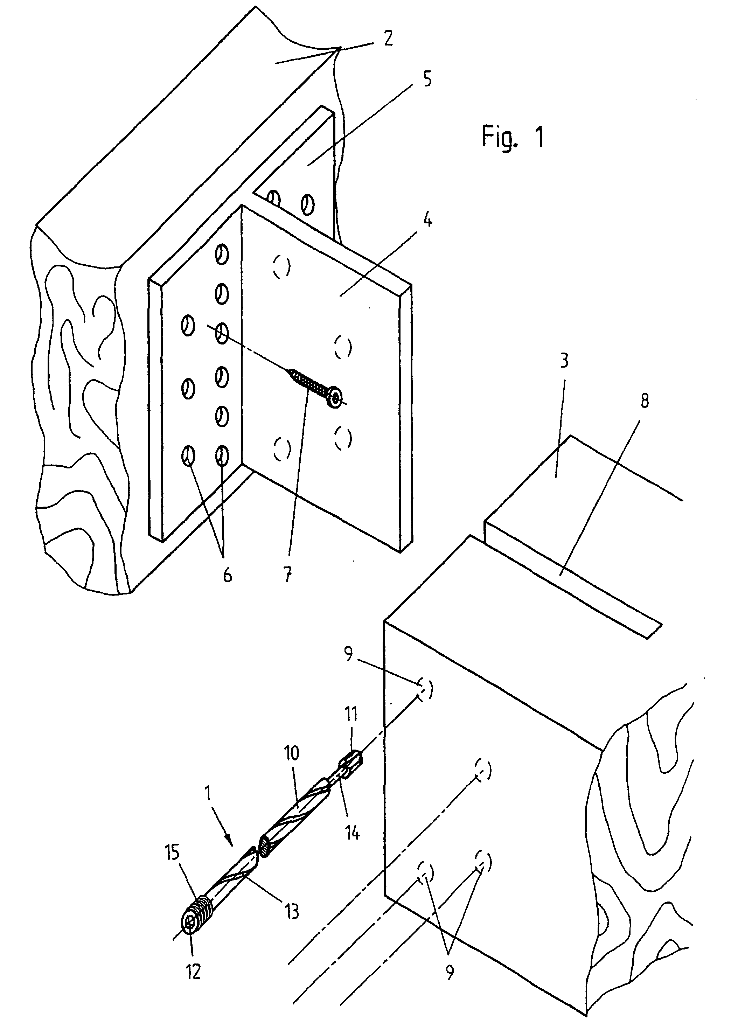

Bei der vorliegenden Erfindung geht es also um ein Verfahren und um ein entsprechendes Verbindungselement 1 zum Verbinden von wenigstens zwei Holzbauteilen 2 und 3. Bei der Darstellung nach Fig. 1 wird zu diesem Zweck eine Knotenplatte 4 eingesetzt, welche mit einem quer dazu liegenden Fußteil 5 versehen ist. Der Fußteil 5 ist mit entsprechenden Bohrungen 6 ausgestattet, in welche Schrauben 7 eingesetzt werden können. Die Knotenplatte 4 wird somit über den Fußteil 5 stumpf an den Holzbauteil 2 angeschraubt. Nun stößt der Holzbauteil 3 mit seiner Stirnseite, d.h. mit seinem freien Ende an den Holzbauteil 2 an. Im Holzbauteil 3 ist ein Schlitz 8 ausgebildet, in weichen die Knotenplatte 4 eingeschoben werden kann. Grundsätzlich wäre es auch denkbar, die Knotenplatte 4 außen anliegend dem Ende des Holzbauteiles 3 zuzuordnen, doch ist aus Gründen der besseren Kraftübertragung und Kraftverteilung eine inetwa zentrische Anordnung der Knotenplatte 4 in einem Schlitz 8 des Holzbauteiles 3 vorteilhaft. Nach dem Einschieben der Knotenplatte 4 in den Schlitz 8 sind die Holzbauteile 2 und 3 in bestimmungsgemäßer Lage zueinander ausgerichtet angeordnet, so daß nun die gegenseitige Befestigung zwischen Knotenplatte 4 und Holzbauteil 3 erfolgen kann. Zu diesem Zweck werden Verbindungselemente 1 eingesetzt, welche in das volle Material des Holzbauteiles 3 und der Knotenplatte 4 eingesetzt werden. Das Verbindungselement 1 stellt die jeweilige Bohrung 9 in der Knotenplatte 4 und gegebenenfalls auch im Holzbauteil 3 selbst her und dient anschließend unmittelbar als Verbindungselement, welches in der selbst hergestellten Bohrung 9 verbleibt.

Es ist in diesem Zusammenhang auch möglich, daß ein solches Verbindungselement 1 den Holzbauteil 3 nicht zur Gänze durchdringt, also mit seinem einen Ende den Holzbauteil 3 nicht ganz durchstößt. Dies kann aus ästhetischen Gründen von Vorteil sein, ist aber auch dann sinnvoll, wenn beispielsweise bei Anwendung der Verbindungselemente und des erfindungsgemäßen Verfahrens in Feuchträumen ein z.B. aus Kohlenstoffstahl bestehender Bohrteil 11 des Verbindungselementes 1 nicht freiliegen sollte.

Gemäß einem geringfügig anderen Verfahren ist es auch möglich, den Holzbauteil 3 bereits werkseitig mit Bohrungen zu versehen, wobei dann die noch nicht mit Bohrungen versehene Knotenplatte 4 in den Schlitz 8 eingeschoben wird. Die vorbereiteten Bohrungen 9 bilden diesfalls praktisch eine Art Bohrlehre, in welche die Verbindungselemente 1 eingeschoben werden. Die Verbindungselemente 1 müßten dann lediglich noch die Bohrung in der Knotenplatte 4 herstellen und sind anschließend gleich als entsprechende Verbindungselemente zwischen der Knotenplatte 4 und dem Holzbauteil 3 eingesetzt.

Gerade durch den Einsatz eines selbstbohrenden Verbindungselementes kann bei der Verbindung von wenigstens zwei Holzbauteilen über eine Knotenplatte ein wesentlicher Fortschritt erzielt werden, der sich nicht nur in der einfacheren und schnelleren Handhabung, sondern auch darin auswirkt, daß jedes eingesetzte Verbindungselement exakt passend eingesetzt ist und somit eine optimale Kraftübertragung ohne Querverschiebungsmöglichkeit geschaffen wird. Durch spezielle Ausbildung des Verbindungselementes kann der Durchmesser der herzustellenden Bohrung exakt auf den Durchmesser des Verbindungselementes abgestimmt werden, so daß eine optimale Passung möglich gemacht wird.

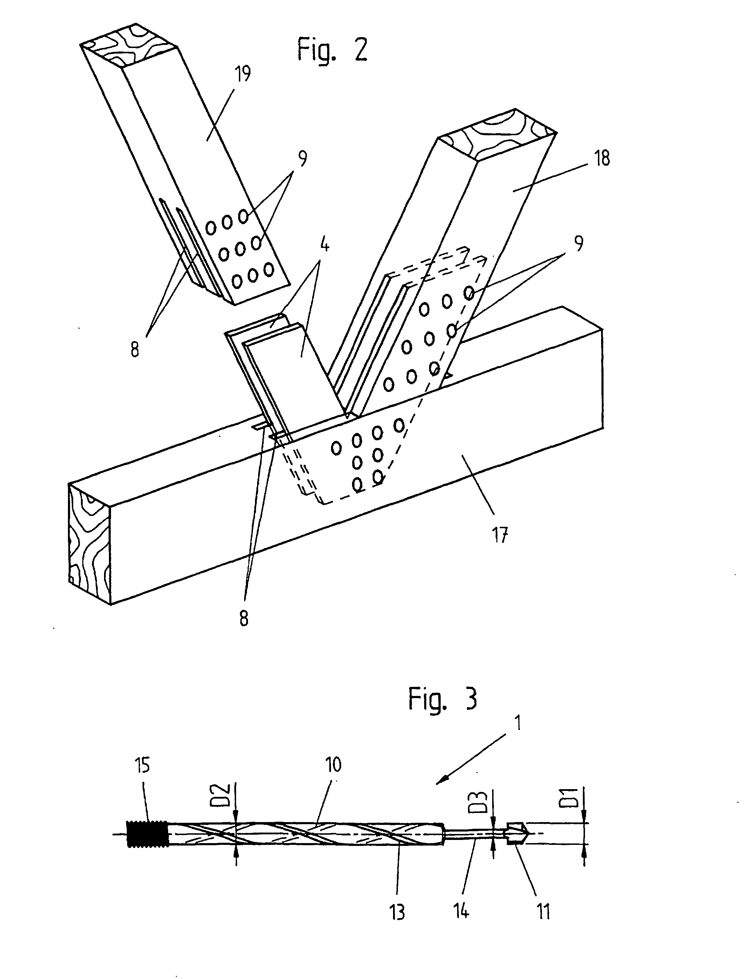

Das erfindungsgemäß einzusetzende Verbindungselement 1 besteht bei den Ausführungen nach den Fig. 1 und 3 im Wesentlichen aus einem stabförmigen Schaft 10, welcher an seinem einen Ende einen Bohrteil 11 und an seinem anderen Ende einen Werkzeugangriff 12 in Form eines Innenangriffes aufweist. Der Durchmesser D2 des Schaftes 10 ist über wenigstens einen oder mehrere Teilbereiche seiner Länge zumindest annähernd dem Bohrdurchmesser D1 des Bohrteiles 11 entsprechend ausgeführt und muß bei der endgültigen Stellung des Verbindungselementes 1 im Bereich der Knotenplatte 4 und in möglichst nahe darauf folgenden Bereichen des Holzbauteiles 3 vorhanden sein. Zumindest dort, wo bei der Verbindung zwischen der Knotenplatte 4 und dem Holzbauteil 3 die größten Scherkräfte auftreten, muß eine entsprechende Passung zwischen der hergestellten Bohrung 9 und dem Schaft 10 gegeben sein.

Am Bohrteil 11 selbst sind natürlich entsprechende Spannuten vorgesehen. Beim erfindungsgemäßen Verbindungselement 1 ist bzw. sind aber auch, zumindest bei der Ausführung nach den Fig. 1 und 3, an dem an den Bohrteil 11 anschließenden Bereich des Schaftes 10 eine oder mehrere Spannuten 13 ausgebildet. Diese Spannuten 13 verlaufen bei der gezeigten Ausführung schraubenlinienförmig, was insbesondere dem Materialtransport für die abgearbeiteten Bohrspäne entgegenkommt. Das abgearbeitete Material soll ja nicht unbedingt ins Freie gefördert werden, sondern unter Umständen in entsprechend verdichteter Form in der Bohrung selbst bzw. in entsprechenden Ausnehmungen des Verbindungselementes 1 aufgenommen werden. Es ist in diesem Zusammenhang ebenfalls möglich, daß eine oder mehrere Spannuten achsparallel verlaufend angeordnet ist bzw. sind. Diese Spannuten werden dann nicht durch den Drehvorgang beim Bohren ständig mit dem nachschiebenden Material gefüllt, sondern nehmen die an der Bohrungswandung anhaftenden Späne auf bzw. werden durch die axial nachgedrückten Späne gefüllt.

Zweckmäßig führen die Spannuten 13 über einen Großteil der Länge oder über die ganze Länge des stabförmigen Schaftes 10, zumindest aber soweit wie dieser den Durchmesser D2 aufweist. Je nach anfallenden Spänen aus dem Bohrvorgang können die Spannuten natürlich auch entsprechend kürzer ausgeführt werden.

Bei der Ausführung nach den Fig. 1 und 3 ist zudem vorgesehen, daß unmittelbar an den Bohrteil 11 anschließend ein Abschnitt 14 mit gegenüber dem Bohrteil 11 verringertem Durchmesser D3 anschließt. Durch diese Konstruktion wird unmittelbar auf den Bohrteil 11 folgend ein zusätzlicher Ringraum zur Aufnahme von Bohrspänen geschaffen. Der Abschnitt 14 muß lediglich einen solchen Durchmesser D3 aufweisen, um das Drehmoment für den Bohrvorgang übertragen zu können. Für die Übertragung von Kräften zwischen der Knotenplatte 4 und dem Holzbauteil 3 hat dieser Abschnitt 14 jedoch keinen Einfluß mehr, da dieser weit außerhalb der in den Schlitz 8 eingesetzten Knotenplatte 4 liegt.

Aufgrund des im Durchmesser verringerten Abschnittes 14, welcher auf den Bohrteil 11 folgt, ist der mit dem Durchmesser D2 ausgestattete Abschnitt des stabförmigen Schaftes 10 mit entsprechendem Abstand vom Bohrteil 11 beginnend ausgeführt. Speziell zur Herstellung einer optimalen Passung ist der Bohrdurchmesser D1 des Bohrteiles 11 inetwa dem Durchmesser D2 des Schaftes 10 angepaßt. Der Abschnitt des Schaftes 10 mit dem Durchmesser D2 ist bei der gezeigten Ausführung über dessen ganze Länge mit den schraubenlinienförmig verlaufenden Spannuten 13 versehen. Gerade bei einer solchen Ausführung kann durch den im Bereich des Abschnittes 14 geschaffenen Ringraum und durch die dann anschließenden Spannuten 13 ein relativ großer Raum zur Aufnahme von Bohrspänen geschaffen werden.

An dem dem Bohrteil 11 gegenüberliegenden Ende des Verbindungselementes 1 ist ein Gewinde 15 ausgebildet, welches beim Bohrvorgang praktisch in den letzten Drehbewegungen in die hergestellte Bohrung 9 eingreift. Dieses Gewinde 15 bewirkt eine axiale Sicherung des Verbindungselementes 1, so daß dieses auch dann, wenn es nicht unmittelbar entsprechenden Scherkräften ausgesetzt ist oder wenn es zu Schwindungen im Bereich des Holzbauteiles 3 kommt, nicht selbsttätig aus der hergestellten Bohrung 9 heraustreten kann. Anstelle eines Gewindes 15 könnten auch andere gewindeähnliche Ausbildungen vorgesehen werden, wobei es ebenfalls denkbar ist, mehrere, kreisförmig umlaufende und parallel zueinander verlaufende Rippen vorzusehen, welche beispielsweise im Querschnitt sägezahnförmig ausgebildet sind. Es geht hier einfach darum, eine zusätzliche Möglichkeit zu schaffen, um das Verbindungselement 1 in dessen Achsrichtung gegen Verschieben gesichert zu halten.

Eine weitere Ausführungsvariante in diesem Zusammenhang könnte sein, daß eine aufgerauhte Oberfläche, eine Rändelung oder dergleichen vorgesehen ist oder aber, daß sonstige Erhebungen bzw. Vertiefungen ausgebildet sind. Bei allen diesen Ausführungen wird ein selbsttätiges Verdrehen bzw. eine selbsttätige axiale Verschiebung des Verbindungselementes verhindert.

Bei der Ausführung nach Fig. 1 und anderen gezeigten Ausführungsformen ist ein entsprechender Schlitz 8 über die ganze Höhe bzw. Dicke des Holzbauteiles 3 durchgehend ausgeführt dargestellt. Natürlich ist auch eine Ausführung denkbar, bei der dieser Schlitz 8 in seiner Ebene gesehen nicht durchgehend ausgeführt ist, sondern praktisch als im Querschnitt rechteckiges Loch an der Stirnseite des Holzbauteiles 3 herausgearbeitet ist, in welches die Knotenplatte 4 eingeschoben wird. Dannzumal ist an dem Holzbauteil 3 lediglich durch die eingesetzten Verbindungselemente 1 erkennbar, daß hier eine Verbindung mit einer Knotenplatte erfolgte, und zwar deshalb, weil der Schlitz 8 und somit auch die Anordnung der Knotenplatte 4 von außen nicht mehr sichtbar sind.

Bei der in Fig. 2 dargestellten Konstruktion werden Holzbauteile 17, 18 und 19 über im Wesentlichen V-förmige Knotenplatten 4 miteinander verbunden. Auf diese Weise kann eine Art Fachwerk aus Holz hergestellt werden, wobei zur gegenseitigen Verbindung Knotenplatten 4 und Verbindungselemente 1 herangezogen werden. Auch hier sind an den Enden der Holzbauteile 18 und 19 Schlitze 8 ausgebildet, in welche die Knotenplatten 4 eingeschoben werden können. In dem Holzbauteil 17 sind ebenfalls Schlitze 8 ausgebildet, in welche eine Art Stegteil der beiden in einem spitzen Winkel zueinander ausgerichteten Knotenplatten 4 eingefügt wird. Durch direkten Einsatz der Verbindungselemente 1 werden sowohl in den Holzbauteilen 17, 18, 19 als auch in den Knotenplatten 4 Bohrungen 9 hergestellt und somit zugleich die paßgenaue Verbindung geschaffen. Natürlich kann auch bei einer solchen Anordnung vorgesehen werden, die Bohrungen 9 bereits werkseitig in den Holzbauteilen 17, 18 und 19 herzustellen, wobei dann durch die erfindungsgemäßen Verbindungselemente lediglich noch die Bohrungen in den Knotenplatten 4 hergestellt werden müssen. Bei einer derartigen Ausführung muß der Bohrteil 11 des erfindungsgemäßen Verbindungselementes 1 ja zwei mit Abstand zueinander angeordnete Knotenplatten 4 durchdringen. Deshalb ist es von besonderer Bedeutung, daß die Verbindungselemente und die Bohrungen exakt aufeinander abgestimmt sind, was eben nur durch die vorliegende Erfindung erfolgen kann, d.h. wenn sich das Verbindungselement das Loch, in welchem es passend für die Kraftübertragung sorgen soll, selbst bohrt.

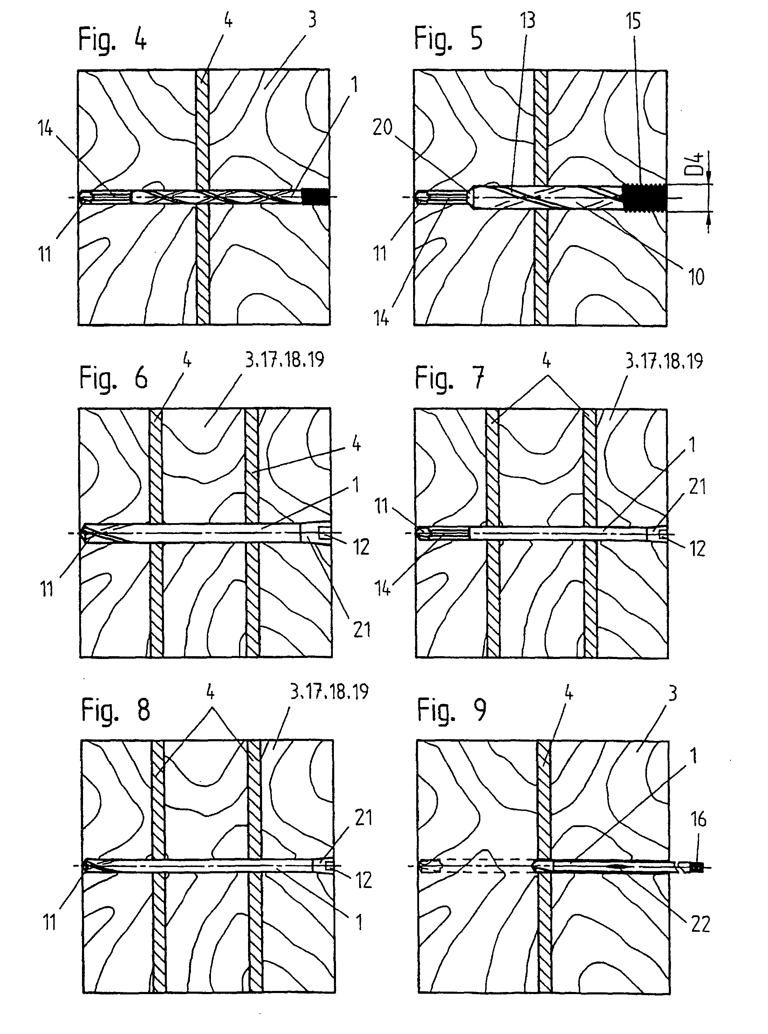

In Fig. 4 ist praktisch ein Schnitt durch eine Ausgestaltung gezeigt, wie sie bei der fertigen Verbindung der Ausführung nach Fig. 1 vorliegen würde. Hier ist also ersichtlich, daß die Länge des gesamten Verbindungselementes 1 gleich oder kürzer ausgebildet sein muß wie die Dicke des Holzbauteiles 3 in Achsrichtung des Verbindungselementes 1 gemessen. Erkennbar ist auch, daß durch den verringerten Durchmesser des Abschnittes 14 und die im Schaft 10 zusätzlich ausgebildeten Spannuten 13 relativ viel Raum zur Aufnahme der Bohrspäne geschaffen wird. Wenn die Verbindungselemente 1 kürzer gestaltet würden, ist darauf zu achten, daß der Bohrteil 11 die Knotenplatte 4 bereits durchbohrt hat, bevor das am hinteren Ende des Verbindungselementes 1 angeordnete Gewinde 15 in die Bohrung eindringt. Durch den sehr geringen Vorschub beim Bohren in der Knotenplatte 4 würde der für einen Rückhalt im Bereich des Gewindes 15 sorgende Eingriff zerstört, da das Holz im Bereich der Bohrungswandung gänzlich ausgerieben würde.

Die Ausgestaltung nach Fig. 5 zeigt, daß mit axialem Abstand versetzt zum Bohrteil 11 ein weiterer Bohrabschnitt 20 vorgesehen ist, welcher einen gegenüber dem ersten Bohrteil 11 vergrößerten Bohrdurchmesser aufweist. Dadurch kann die herzustellende Bohrung stufenweise aufgebohrt werden, wobei eine solche Ausbildung gerade dann sinnvoll ist, wenn ein Verbindungselement mit größerem Durchmesser D4 einzusetzen ist. Auf den weiteren Bohrabschnitt 20 folgt hier also ein stabförmiger Schaft 10 mit dem Durchmesser D4, wobei der Durchmesser D4 des Schaftes 10 geringfügig kleiner ausgebildet sein kann als der Bohrdurchmesser des weiteren Bohrabschnittes 20. Eine solche Maßnahme bewirkt, daß die Lochreibung zwischen Verbindungselement 1 und Bohrung 9 nicht zu groß wird, so daß der Bohrvorgang bis zum endgültigen Setzen des Verbindungselementes ohne zu starke Erhöhung des Drehmomentes abgeschlossen werden kann. Im Rahmen der Erfindung ist es denkbar, daß mehr als zwei Stufen unterschiedlicher Durchmesser von Bohrabschnitten vorgesehen sind, was von dem entsprechenden Durchmesser D4 des Schaftes 10 abhängig gemacht werden kann.

Aus den Fig. 6 bis 8 ist ersichtlich, daß durchaus verschiedenste Ausführungsvarianten von Verbindungselementen eingesetzt werden können, und daß im Durchmesser verringerte Abschnitte 14, Spannuten 13 oder andere Ausführungsformen in entsprechender Weise miteinander kombiniert werden können. Bei den Ausführungen nach den Fig. 6 bis 8 ist zudem vorgesehen, daß an dem dem Bohrteil 11 abgewandten Ende des Schaftes 10 eine kegelstumpfförmige Erweiterung 21 ausgebildet ist. Hier wird am Endbereich die Bohrungswandung noch entsprechend verdichtet, womit ein Ausfransen entsprechender Späne an der Oberfläche des Holzbauteiles 3 verhindert wird. Auch bei diesen Anordnungen ist ein Werkzeugangriff 12 in Form eines Innenangriffes vorgesehen, wobei ein solcher Innenangriff ebenfalls als eine Art Schraubenzieherschlitz ausgebildet sein kann.

Bei der Ausführung nach Fig. 9 ist ein Werkzeugangriff 16 in Form eines Außenangriffes vorgesehen, wobei hier natürlich darauf zu achten ist, daß ein entsprechendes Drehmoment übertragen werden muß, und daß auch das freie Ende mit dem Werkzeugangriff 16 in dem Holzbauteil 3 versenkt unterzubringen ist. Deshalb hat ebenfalls eine entsprechende Anpassung an ein Werkzeug zu erfolgen.

Fig. 9 zeigt weiter eine Ausführung eines Verbindungselementes 1, welches an der Oberfläche eine oder mehrere Erhebungen 22 aufweist. Es ist dabei denkbar, daß diese Erhebungen 22 nach dem endgültigen Setzen des Verbindungselementes 1 in dem Bereich des Holzbauteiles oder aber in dem Bereich der Knotenplatte 4 zu liegen kommen. Auch mit einer solchen Anordnung ist eine Verdreh- und Verschiebesicherung gegeben.

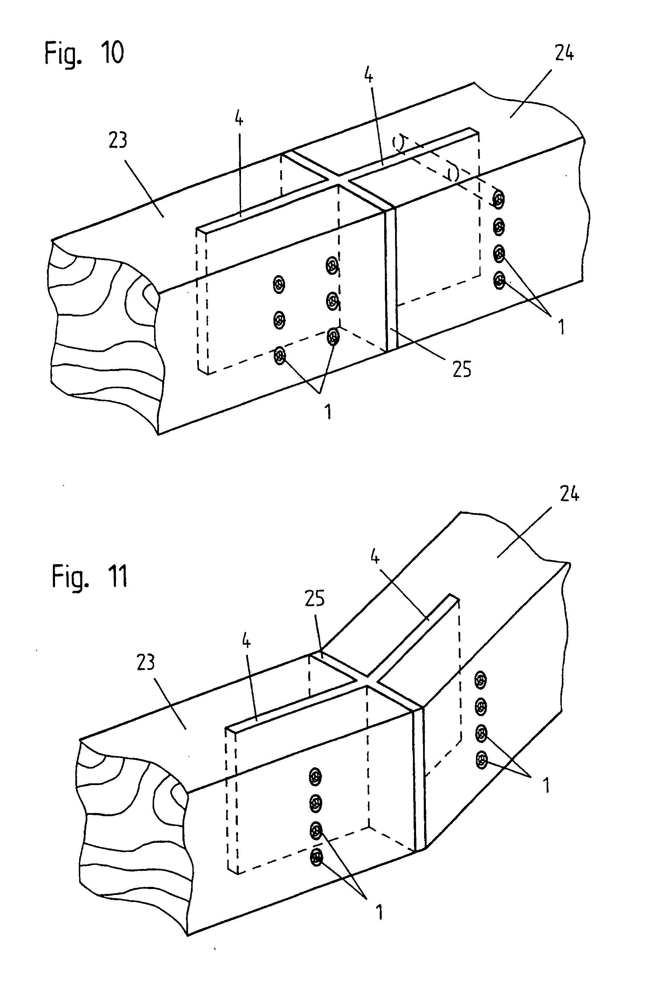

Die Ausführungen nach den Fig. 10 und 11 zeigen auf, daß mit einer Knotenplatte 4 nicht nur rechtwinklig aneinander anstoßende Holzbauteile oder fachwerkartig aufeinander stoßende Holzbauteile miteinander verbunden werden können, sondern auch stumpf mit ihren Stirnseiten aneinander anstoßende Holzbauteile 23, 24. Diesfalls sind nach zwei entgegengesetzten Richtungen von einer Querplatte 25 abstehende Knotenplatten 4 vorgesehen, welche in entsprechende Schlitze an den Enden der Holzbauteile 23, 24 hineinragen. Dabei ist es auch möglich, daß die beiden Holzbauteile 23, 24 - wie Fig. 11 zu entnehmen ist - in einem stumpfen Winkel aneinander anschließen, womit auch die Möglichkeit gegeben ist, daß die Knotenplatten 4 in einem entsprechenden Winkel zueinander bzw. zur Zwischenplatte 25 angeordnet sind. Hier erfolgt die Verbindung ebenfalls wieder durch erfindungsgemäße Verbindungselemente 1, welche die Holzbauteile 23, 24 und die Knotenplatten 4 durchbohren und dann selbst die Verbindung herstellen.

In der vorstehenden Beschreibung wurde von einem Werkzeugangriff 12 bzw. 16 in Form eines Innen- bzw. eines Außenangriffes gesprochen. Es wäre im Rahmen der Erfindung durchaus denkbar, das erfindungsgemäße Verbindungselement 1 in gleicher Weise wie bei einer Schraube mit einem Kopf zu versehen, welcher dann mit einem entsprechenden Innenoder Außenangriff versehen wäre. Bei einer solchen Konstruktion muß allerdings berücksichtigt werden, daß das Verbindungselement eintreibseitig wohl kaum ganz versenkbar sein kann, da ja der Kopf entsprechend über den Durchmesser des Schaftes 10 vorsteht.

Das Verbindungselement 1 kann z.B. auch aus rostfreiem Material hergestellt werden, wobei der Bohrabschnitt in diesem Falle für den notwendigen Bohrvorgang härtbar gemacht wird. Möglich ist es auch, einen Bohrteil anzuschweißen oder ein entsprechendes Bohrplättchen, z.B. aus Kohlenstoffstahl, einzusetzen.

Ebenfalls wurde in der vorstehenden Beschreibung davon ausgegangen, daß eine Knotenplatte aus Metall, beispielsweise aus Stahl oder aus Aluminium eingesetzt wird.

## Patentansprüche

1. Verbindungselement mit einem im wesentlichen stabförmigen Schaft zum Einsatz bei Verbindungen von wenigstens zwei Holzbauteilen und mindestens einer in einen oder mehrere Schlitz(e) der Holzbauteile einsetzbaren, aus Metall bestehenden Knotenplatte, **dadurch gekennzeichnet, daß** der stabförmige Schaft (10) zumindest an seinem einen Ende einen eine Bohrung in der Knotenplatte und in den Holzbauteilen herstellenden Bohrteil (11) und an seinem anderen Ende einen Werkzeugangriff (12, 16) für einen Drehantrieb aufweist, wobei der Durchmesser (D2) des Schaftes (10) wenigstens über einen oder mehrere Teilbereiche seiner Länge zumindest annähernd dem Bohrdurchmesser (D1) des Bohrteiles (11) entspricht, und daß an dem dem Bohrteil (11) gegenüberliegenden Ende des Schaftes (10) Mittel zur axialen Verschiebesicherung in eingesetztem Zustand ausgebildet sind.

2. Verbindungselement nach Anspruch 1, **dadurch gekennzeichnet, daß** am Bohrteil (11) und gegebenenfalls an einem an den Bohrteil (11) anschließenden Abschnitt des stabförmigen Schaftes (10) eine oder mehrere Spannuten (13) ausgebildet ist bzw. sind.

3. Verbindungselement nach Anspruch 1, **dadurch gekennzeichnet, daß** unmittelbar an den Bohrteil (11) anschließend ein Abschnitt (14) mit gegenüber dem Bohrteil (11) verringertem Durchmesser (D3) anschließt.

4. Verbindungselement nach einem der Ansprüche 1 bis 3, **dadurch gekennzeichnet, daß** am stabförmigen Schaft (10) mit axialem Abstand versetzt zum Bohrteil (11) ein weiterer Bohrabschnitt (20) mit gegenüber dem ersten Bohrteil (11) vergrößertem Bohrdurchmesser ausgebildet ist.

5. Verbindungselement nach Anspruch 2, **dadurch gekennzeichnet, daß** eine oder mehrere Spannut(en) (13) über einen Großteil der Länge oder über die ganze Länge des stabförmigen Schaftes (10) geführt ist bzw. sind.

6. Verbindungselement nach einem der Ansprüche 1 bis 5, **dadurch gekennzeichnet, daß** zumindest auf einem Teilbereich der Länge des stabförmigen Schaftes (10) ein Gewinde (15) oder eine gewindeähnliche Ausbildung vorgesehen ist.

7. Verbindungselement nach einem der Ansprüche 1 bis 5, **dadurch gekennzeichnet, daß** zumindest auf einem Teilbereich der Länge des stabförmigen Schaftes (10) eine aufgerauhte Oberfläche, eine Rändelung oder dergleichen vorgesehen ist oder Erhebungen bzw. Vertiefungen ausgebildet sind.

8. Verbindungselement nach einem der Ansprüche 1 bis 7, **dadurch gekennzeichnet, daß** das dem Bohrteil (11) abgewandte Ende des stabförmigen Schaftes (10) kegelstumpfförmig erweitert ausgeführt ist.

9. Verbindungselement nach Anspruch 3, **dadurch gekennzeichnet, daß** an dem auf den Abschnitt (14) verringerten Durchmessers (D3) folgenden, zumindest annähernd dem Bohrdurchmesser (D1) angepaßten Abschnitt des stabförmigen Schaftes (10) eine oder mehrere Spannut(en) (13) ausgebildet ist bzw. sind.

10. Verbindungselement nach einem der Ansprüche 1 bis 9, **dadurch gekennzeichnet, daß** der Werkzeugangriff als Innenangriff (12) ausgebildet ist.

11. Verbindungselement nach einem der Ansprüche 1 bis 9, **dadurch gekennzeichnet, daß** der Werkzeugangriff als Außenangriff (16) ausgebildet ist.

12. Verbindungselement nach Anspruch 4, **dadurch gekennzeichnet, daß** auf den weiteren Bohrabschnitt (20) mit gegenüber dem ersten Bohrteil (11) vergrößertem Bohrdurchmesser am stabförmigen Schaft (10) ein im wesentlichen zylindrischer Abschnitt mit gegenüber dem weiteren Bohrabschnitt (20) geringfügig kleinerem Durchmesser (D4) folgt.

13. Verbindungselement nach einem der Ansprüche 1 bis 12, **dadurch gekennzeichnet, daß** eine oder mehrere Spannut(en) (13) schraubenlinienförmig verlaufend angeordnet ist bzw. sind.

14. Verbindungselement nach einem der Ansprüche 1 bis 12, **dadurch gekennzeichnet, daß** eine oder mehrere Spannut(en) (13) achsparallel verlaufend angeordnet ist bzw. sind.

## Claims

1. A connecting element with a substantially rod-like shank for use in connections of at least two timber components and with at least one joint plate which can be inserted into one or more slot(s) of the timber components and which consists of metal, **characterised in that** the rod-like shank (10) has at at least one end a drilling member (11) effecting a bore in the joint plate and in the timber components and at its other end a tool engagement portion (12,16) for a rotary drive, wherein at least over one or more portions of its length the diameter (D2) of the shank (10) corresponds at least approximately to the bore diameter (D1) of the drilling member (11), and **in that** at the end of the shank (10) opposite the drilling member (11) means are formed for preventing axial displacement in the set condition.

2. A connecting element according to Claim 1, **characterised in that** one or more flutes (13) is/are formed in the drilling member (11) and optionally in a portion of the rod-like shank (10) adjoining the drilling member (11).

3. A connecting element according to Claim 1, **characterised in that** immediately adjacent the drilling member (11) a portion (14) of reduced diameter (D3) with respect thereto adjoins the drilling member (11).

4. A connecting element according to any one of Claims 1 to 3, **characterised in that** a further drilling portion (20), which is displaced at an axial distance from the drilling member (11), is formed on the rod-like shank (20) with an enlarged drilling diameter with respect to the first drilling member (11).

5. A connecting element according to Claim 2, **characterised in that** one or more flute(s) (13) is/are extended over the majority of the length or over the entire length of the rod-like shank (10).

6. A connecting element according to any one of Claims 1 to 5, **characterised in that** a screw-thread (15) or a threadlike design is provided at least over a portion of the length of the rod-like shank (10).

7. A connecting element according to any one of Claims 1 to 5, **characterised in that** a roughened surface, a knurling or the like is provided at least over a portion of the length of the rod-lie the shank (10), or raised portions or indentations are formed thereon.

8. A connecting element according to any one of Claims 1 to 7, **characterised in that** the end of the rod-lie shank (10) remote from the drilling member (11) is of widened frustoconical form.

9. A connecting element according to Claim 3, **characterised in that** one or more flute(s) (13) is/are formed in the portion of the rod-like shank (10) following the portion (14) of reduced diameter (D3) and adapted at least approximately to the drilling diameter (D1).

10. A connecting element according to any one of Claims 1 to 9, **characterised in that** the tool engagement portion is in the form of an internal engagement portion (12).

11. A connecting element according to any one of Claims 1 to 9, **characterised in that** the tool engagement portion is in the form of an external engagement portion (16).

12. A connecting element according to Claim 4, **characterised in that** on the rod-like shank (10) a substantially cylindrical portion of slightly smaller diameter (D4) with respect to the further drilling portion (20) follows said further drilling portion (20) with an enlarged drilling diameter with respect to the first drilling member (11).

13. A connecting element according to any one of Claims 1 to 12, **characterised in that** one or more flute(s) (13) is/are arranged extending in a helical line.

14. A connecting element according to any one of Claims 1 to 12, **characterised in that** one or more flute(s) (13) is/are arranged extending axially parallel.

## Revendications

1. Elément d'assemblage avec une hampe pour l'essentiel en forme de tige à insérer pour assembler au moins deux éléments en bois et au moins une plaque d'encoignure métallique pouvant être insérée dans une ou plusieurs fentes des éléments en bois,
**caractérisé en ce que**
la hampe (10) en forme de tige présente, au moins au niveau de l'une de ses extrémités, une partie de perçage (11) réalisant un perçage dans la plaque d'encoignure et dans les éléments en bois, et à son autre extrémité une section de prise d'outil (12, 16) pour un entraînement rotatif, le diamètre (D2) de la hampe (10), du moins sur une ou plusieurs zones partielles de sa longueur, correspondant au moins approximativement au diamètre de perçage (D1) de la partie de perçage (11), et **en ce qu'**à l'extrémité opposée de la hampe (10) des moyens sont prévus pour bloquer le déplacement axial à l'état monté.

2. Elément d'assemblage selon la revendication 1,
**caractérisé en ce qu'**
au niveau de la partie de perçage (11) et le cas échéant au niveau d'une section (14) suivant la partie de perçage (11) de la hampe (10) en forme de tige une ou plusieurs gorges de dégagement (13) sont prévues.

3. Elément d'assemblage selon la revendication 1,
**caractérisé en ce qu'**
immédiatement après la partie de perçage (11) est située une section (14) d'un diamètre (D3) inférieur à celui de la partie de perçage (11).

4. Elément d'assemblage selon l'une quelconque des revendications 1 à 3,
**caractérisé en ce qu'**
au niveau de la hampe (10) en forme de tige une autre section de perçage (20) est prévue, décalée d'une distance axiale par rapport à la partie de perçage (11) et présentant un diamètre de perçage supérieur à celui de la première partie de perçage (11).

5. Elément d'assemblage selon la revendication 2,
**caractérisé en ce qu'**
une ou plusieurs gorges de dégagement (13) se situent sur une grande partie de la longueur ou sur toute la longueur de la hampe (10) en forme de tige.

6. Elément d'assemblage selon l'une quelconque des revendications 1 à 5,
**caractérisé en ce qu'**
un filetage (15) ou une configuration similaire à celle d'un filetage est prévu au moins sur une zone partielle de la longueur de la hampe (10) en forme de tige.

7. Elément d'assemblage selon l'une quelconque des revendications 1 à 5,
**caractérisé en ce qu'**
au moins sur une zone partielle de la longueur de la hampe (10) en forme de tige une surface rugueuse, un moletage ou similaire est prévu ou des saillies ou des creux sont formés.

8. Elément d'assemblage selon l'une quelconque des revendications 1 à 7,
**caractérisé en ce que**
l'extrémité de la hampe (10) en forme de tige opposée à la partie de perçage (11) est évasée de façon tronconique.

9. Elément d'assemblage selon la revendication 3,
**caractérisé en ce que**
sur la section de la hampe (10) en forme de tige, suivant la section (14) d'un diamètre inférieur (D3), section adaptée au moins approximativement au diamètre de perçage (D1), sont prévues une ou plusieurs gorges de dégagement (13).

10. Elément d'assemblage selon l'une quelconque des revendications 1 à 9,
**caractérisé en ce que**
la prise d'outil présente la forme d'une prise femelle (12).

11. Elément d'assemblage selon l'une quelconque des revendications 1 à 9,
**caractérisé en ce que**
la prise d'outil présente la forme d'une prise mâle (16).

12. Elément d'assemblage selon la revendication 4,
**caractérisé en ce que**
l'autre section de perçage (20), d'un diamètre de perçage supérieur à celui de la première partie de perçage (11), est prolongée, sur la hampe (10) en forme de tige, par une section pour l'essentiel cylindrique présentant un diamètre (D4) légèrement inférieur à celui de l'autre section de perçage (20).

13. Elément d'assemblage selon l'une quelconque des revendications 1 à 12,
**caractérisé en ce qu'**
une ou plusieurs gorges de dégagement (13) sont disposées de manière hélicoïdale.

14. Elément d'assemblage selon l'une quelconque des revendications 1 à 12,
**caractérisé en ce qu'**
une ou plusieurs gorges de dégagement (13) sont disposées de manière parallèle à l'axe.
